# EUROPÄISCHE PATENTSCHRIFT

(11) **EP 2 275 748 B1**
(45) Veröffentlichungstag und Bekanntmachung des Hinweises auf die Patenterteilung: **04.04.2018**
(21) Anmeldenummer: 10169694.6
(22) Anmeldetag: 15.07.2010
(51) Int. Cl.: F24D 19/10, F24D 11/00

(54) **Verfahren zum Betrieb einer Heizungsanlage sowie Heizungsanlage**
Method for operating a heating assembly and heating assembly
Procédé de fonctionnement d'une installation de chauffage et installation de chauffage

(30) Priorität: 15.07.2009 DE 102009033493
(43) Veröffentlichungstag der Anmeldung: 19.01.2011
(73) Patentinhaber: Baunach, Hans-Georg, 52074 Aachen (DE)
(72) Erfinder: Baunach, Hans-Georg, 52074 Aachen (DE)
(74) Vertreter: Naeven, Ralf

(56) Entgegenhaltungen:
- EP-A2- 0 819 893
- DE-A1- 3 917 930
- DE-C1- 3 714 261
- US-A- 4 403 572

## Beschreibung

Die Erfindung betrifft ein Verfahren zum Betrieb einer Heizungsanlage gemäß dem Oberbegriff des Anspruchs 1 sowie eine Heizungsanlage gemäß dem Oberbegriff des Anspruchs 4.

Verschiedene Wärmeerzeuger, wie bspw. Holzkessel und verbrennungsmotorisch betriebene Blockheizkraftwerke, benötigen eine konstant geregelte Mindest-Rücklauftemperatur. Diese wird erzeugt, indem mit einem thermostatisch geregelten Misch- oder Einspritzventil ein Teil des Wärmeerzeugervorlaufes dem Rücklauf des Wärmeerzeugers hinzugemischt wird, so dass die geforderte Rücklauftemperatur konstant gehalten wird. Diese Maßnahme ist als Rücklaufanhebung (RLA) bekannt.

Derartige Wärmeerzeuger werden sehr häufig mit Pufferspeichern kombiniert, in denen die erzeugte Wärme bis zu ihrer Verwendung gespeichert wird. Um eine möglichst hohe Nutzbarkeit der gespeicherten Wärmemenge zu erzielen, muss aufgrund des zweiten Hauptsatzes der Thermodynamik der obere Teil des Puffers in möglichst kurzer Zeit auf eine möglichst hohe Temperatur gebracht werden, anstatt eine große Menge des Wärmetransport- und -speichermediums, was zumeist Wasser ist, nur mittelmäßig zu erwärmen. Dieses Ziel wird mit verschiedenen Verfahren und Vorrichtungen erreicht, deren Funktionen den Zweck haben, der RLA zunächst wärmeres Wasser aus einem mittleren Anschluss des Pufferspeichers zuzuführen, bevor hierfür auf das kälteste Wasser eines untersten Anschlusses zugegriffen wird. Die bekannten Vorrichtungen umfassen beispielsweise eine Anfahrentlastung mit Dreiwege-Umschaltventil und Speicherfühler, ein Dreiwege-Mischventil mit zweitem Regelkreis und Vorlauffühler, ein Dreiwege-Mischventil mit einem Regelkreis und Folgeschaltung, ein Mehrwege-Mischventil mit einem Regelkreis.

Zur Erreichung eines möglichst hohen Wirkungsgrades wird oftmals die Brennwertnutzung eingesetzt, bei der die Kondensationswärme des in den Abgasen enthaltenen Wasserdampfes genutzt wird. Hierfür wird das Abgas über einen Abgas-Wärmetauscher geführt, der zumindest von einem Teil des Rücklaufs des Wärmeerzeugers gespeist wird. Voraussetzung dafür ist jedoch, dass die Oberfläche des Wärmetauschers und damit die Rücklauftemperatur des in den Abgas-Wärmetauscher einströmenden Wärmetransport- und Wärmespeichermediums (meist Wasser) den Taupunkt des Abgases unterschreitet, der bei Gas als Brennstoff etwa bei 58°C und bei Öl etwa bei 48°C liegt. Je niedriger also die Rücklauftemperatur des einströmenden Wassers ist, desto effizienter ist die Brennwertnutzung. Andererseits benötigt der Rücklauf des Wärmeerzeugers die vorgenannte Mindest-Rücklauftemperatur.

Aus der DE 37 14 261 C1 sind ein Verfahren sowie eine Vorrichtung der eingangs genannten Art bekannt. Es ist offenbart, zwei von heißen Rauchgasen durchströmte Abgaswärmetauscher vorzusehen, wobei ein unterster Abgaswärmetauscher vom Wasser eines untersten Anschlusses eines Pufferspeicher durchflossen wird. Mittels eines regelbaren 2-Wege-Ventils wird die Durchflussmenge des Wassers durch den untersten Abgaswärmetauscher in Abhängigkeit von bestimmten Temperaturwerten gesteuert. Es ist nicht vorgesehen zum Zwecke der Rücklaufanhebung Heizmedium aus dem Vorlauf des Wärmeerzeugers dem Rücklauf beizumischen.

Aus der US 4403572 A ist eine mit Brennwertkessel betriebene Heizungsanlage mit Rücklaufanhebung bekannt, bei der dem Rückaluf des Wärmeerzeugers zusätzlich zur Vorwärmung durch die Brennwertnutzung Heizmedium aus dem Vorlauf beigemischt wird. Mittels einer Pumpe wird dem Rücklauf des Wärmeerzeugers aus dem Pufferspeicher Heizmedium lediglich aus einem unteren Kalt-Anschluss zugeführt.

Der Erfindung liegt nun das technische Problem zugrunde, einerseits die Brennwertnutzung möglichst effizient zu gestalten und andererseits die vom Wärmeerzeuger gelieferte Wärmemenge effizient im Pufferspeicher speichern zu können. Gelöst wird diese Aufgabe durch die Merkmale der unabhängigen Ansprüche. In den Unteransprüchen sind vorteilhafte Weiterentwicklungen der Erfindung dargestellt.

Eine Regelung der Abgastemperatur des Abgas-Wärmetauschers oder der Temperatur des Heizmediums am Ausgang des Abgas-Wärmetauschers mit dem Durchsatz des aus dem Pufferspeicher austretenden kältestmöglichen Heizmediums als Stellgröße ermöglicht eine optimale Einstellung der aus dem untersten Anschluss des Pufferspeichers entnommenen Heizmediummenge, so dass eine unnötig hohe Entnahmemenge vermieden wird. Dies wird durch einen gesonderten Regelkreis für die Abgastemperatur erreicht, der zumindest in einer Teilstrecke parallel zum Regelkreis für die Rücklaufanhebung angeordnet ist. Die Heizmediumströme beider Regelkreise münden im Rücklauf des Wärmeerzeugers. Auf diese Weise kann eine Optimierung in der Hinsicht erreicht werden, dass zum Einen dem Abgas-Wärmetauscher in der Menge hinreichendes und möglichst kaltes Heizmedium zur Verfügung gestellt wird, um die im Abgas enthaltene ggf. latente Restwärme weitestgehend auszunutzen, und gleichzeitig dem Pufferspeicher so wenig wie möglich des kältesten Heizmediums entnommen wird. Letzteres trägt zur Optimierung der Beladung des Pufferspeichers bei.

Beispielsweise kann mittels der Regelung dafür gesporgt werden, dass eine vorgegebene Optimaltemperatur des Abgases oder des aus dem Abgas-Wärmetauscher austretenden Heizmediums möglichst genau eingehalten wird. Bei einer zu hohen Temperatur der Regelgröße würde die Brennwertnutzung nicht optimal wirken, so dass der Durchssatz des Heizmediums aus dem untersten Pufferspeicheranschluss erhöht werden muss. Sinkt die Temperatur hingegen zu sehr unter den Optimalwert, muss der Durchsatz mittels des Regelkreises vermindert werden. Falls die Temperatur des aus dem Abgas-Wärmetauscher herausströmenden Heizmediums als Regelgröße dient, sollte ein Mindestdurchsatz sichergestellt werden, um einen zuverlässigen Wärmetransport aus dem Wärmetauscher zum Temperaturfühler sicherzustellen.

Im Folgenden werden beispielhaft einige Varianten des erfindungsgemäßen Verfahrens und der erfindungsgemäßen Vorrichtung anhand von Figuren dargestellt.

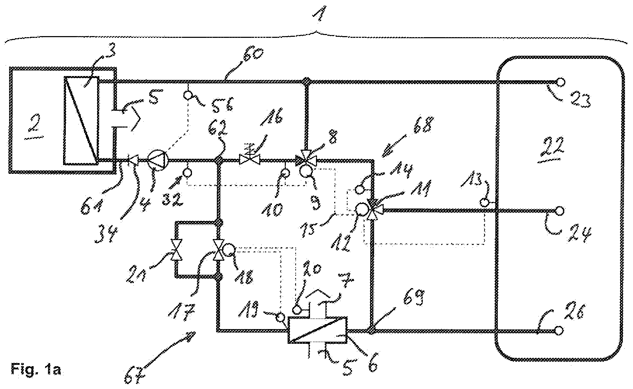

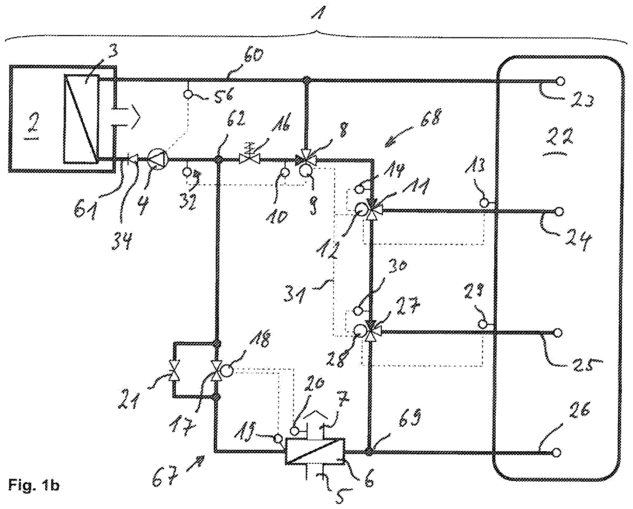

Fig. 1 a zeigt eine Heizungsanlage 1 mit einem Wärmeerzeuger 2, dessen Primärwärmetauscher 3 eine geregelte Mindest-Rücklauftemperatur benötigt. Ein Vorlauf 60 des Wärmeerzeugers 2 ist mit dem obersten Anschluss 23 eines Pufferspeichers 22 verbunden. Verbraucherseitige Anschlüsse des Pufferspeichers 22 sind hier nicht dargestellt. Wärmeerzeugerseitig sind ein mittlerer Anschluss 24 und ein unterster Anschluss 26 des Pufferspeichers 22 über einen RLA-Strang 68 mit einem Rücklauf 61 des Wärmeerzeugers 2 verbunden. Zur Regelung der Mindest-Rücklauftemperatur für den Primärwärmetauscher 3 ist eine Rücklaufanhebung (RLA) vorgesehen, die durch ein RLA-Dreiwege-Ventil 8 verwirklicht ist. Die Rücklauftemperatur wird von einem RLA-Temperaturfühler 10 gemessen, der in Fließrichtung unmittelbar hinter dem Ausgang des RLA-Dreiwege-Ventils 8 angeordnet ist. Die Rücklauftemperatur kann auch an einer anderen Stelle, z. B. der mit dem Bezugszeichen 32 dargestellten Position, gemessen werden. Als RLA-Strang 68 wird der Leitungsstrang bezeichnet, der vom Verbindungspunkt 69 (am untersten Anschluss 26) über das RLA-Dreiwege-Ventil 8 bis zum Verbindungspunkt 62 (im Rücklauf 61) verläuft.

Die vom RLA-Temperaturfühler 10 festgestellte Temperatur wirkt entweder proportional (beispielsweise über einen Kapillarrohrfühler und ein Dehnstoffelement) oder dreipunktintegral (beispielsweise mittels elektrischem Stellantrieb mit Endschaltern) auf ein Stellglied 9 für das RLA-Dreiwege-Ventil 8. Angetrieben wird das als Heizungsmedium dienende Wasser mittels einer Ladepumpe 4, die mit einem Rückflussverhinderer oder einer Schwerkraftbremse 34 in Reihe geschaltet ist, um unerwünschte Rückströme oder Stillstandszirkulationen zu vermeiden. Die Ladepumpe 4 ist in ihrer Fördermenge an die Leistung des Wärmeerzeugers 2 anzupassen und kann insbesondere bei abgeschaltetem Wärmeerzeuger 2 ebenfalls abgeschaltet werden. Die Anpassung der Fördermenge kann beispielsweise durch die Regelung der Vorlauftemperatur als Führungsgröße erfolgen. Die Vorlauftemperatur wird von einem VL-Temperaturfühler 56 gemessen und wirkt beispielsweise proportional auf die Drehzahl der Ladepumpe 4. Das nicht zur Beimischung zum Rücklauf 61 genutzte Wasser des Vorlaufs 60 gelangt über den obersten Anschluss 23 zur Beladung in den Pufferspeicher 22. Ein zweiter Eingang des RLA-Dreiwege-Ventils 8 ist mit dem Ausgang eines AE-Dreiwege-Ventils 11 verbunden, welches zur Anfahrentlastung (AE) dient. Das AE-Dreiwege-Ventil 11 führt aus dem Pufferspeicher 22 zunächst über einen mittleren Pufferanschluss 24 dem RLA-Strang 68 wärmeres Wasser zu, bevor auf das kälteste Wasser eines untersten Pufferanschlusses 26 des Pufferspeichers 22 zugegriffen wird. Der Zugriff auf das wärmere Wasser des mittleren Pufferanschlusses 24 bewirkt, dass das Wasser am Eingang des RLA-Dreiwege-Ventils 8 ebenfalls wärmer ist und somit weniger Vorlaufwasser aus dem Vorlauf 60 beigemischt werden muss. Dies wiederum hat zur Folge, dass der Zustrom von Vorlaufwasser in den obersten Pufferansschluss 23 erhöht wird. Ein Stellglied 12 des AE-Dreiwege-Ventils 11 kann von einem am Pufferspeicher 22 im Bereich des mittleren Pufferanschlusses 24 angeordneten Temperaturfühler 13 proportional (beispielsweise Kapillarrohrfühler und Dehnstoffelement) oder zweipunktintegral (beispielsweise elektrischer Stellantrieb mit selbsttätigem Rücklauf) gesteuert werden. Alternativ kann das AE-Dreiwege-Ventil 11 auch von einem die Mischtemperatur messenden DV-Temperaturfühler 14 (DV = Dreiwege-Ventil) proportional oder dreipunktintegral (beispielsweise elektrischer Stellantrieb mit Endschaltern) gesteuert werden.

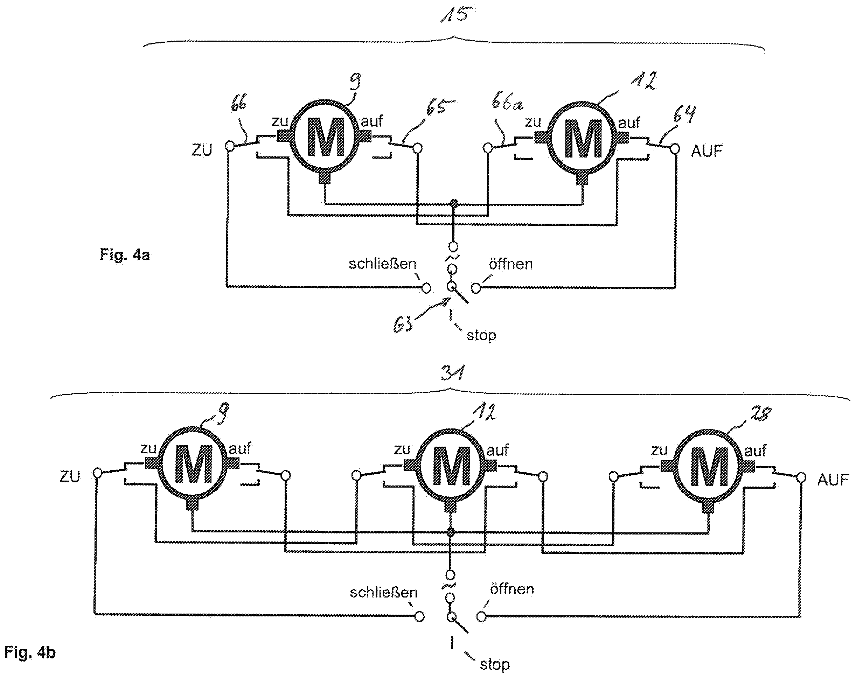

Weiter alternativ ist es auch möglich, das RLA-Dreiwege-Ventil 8 und das AE-Dreiwege-Ventil 11 elektrisch gekoppelt über einen einzigen Regelkreis mit der Temperatur des RLA-Temperaturfühlers 10 (alternativ auch an der Position 32) zu regeln. Eine geeignete elektrische Kopplung 15 ist in Fig. 4a beschrieben und wird später näher erläutert.

In der beschriebenen Weise lassen sich somit die Anfahrentlastung und die Rücklaufanhebung regeltechnisch auf vorteilhafte Weise miteinander koppeln.

Im vorgenannten Beispiel wird die Kondensationswärme des im Abgas des Wärmeerzeugers 2 enthaltenen Wasserdampfes genutzt. Einem Abgaskanal 5 des Wärmeerzeugers 2 ist hierfür ein in einem AWT-Strang 67 angeordneter Abgas-Wärmetauscher 6 in Reihe nachgeschaltet, der als Kondensator ausgebildet sein kann. Der Abgaskanal 5 ist in Fig. 1a der Übersichtlichkeit halber zunächst am Wärmeerzeuger 2 selbst zeichnersich dargestellt, während die Fortsetzung des Abgaskanals 5 in Fig. 1 a unten zu sehen ist. Der Abgas-Wärmetauscher 6 ist eingangsseitig mit dem untersten Pufferanschluss 26 und ausgangsseitig über einen Verbindungspunkt 62 mit dem Rücklauf 61 verbunden. Als AWT-Strang wird der über den Abgas-Wärmetauscher 6 laufende Leitungsstrang zwischen den Verbindungspunkten 69 und 62 verstanden.

Zwischen dem Ausgang des RLA-Dreiwege-Ventils 8 und dem Verbindungspunkt 62 ist ein Differenzdruck-Regel-Ventil (DRV) 16 geschaltet, welches einen konstanten vom Durchfluss möglichst unabhängigen Differenzdruckabfall bewirkt, der dem des Abgas-Wärmetauschers 6 bei Nenn-Durchsatz entspricht und typischerweise zwischen 50 und 100 mbar liegt.

Parallel zum RLA-Strang 68, der durch die in Reihe geschalteten Elemente DRV 16, RLA-Dreiwege-Ventil 8 und AE-Dreiwege-Ventil 11 gebildet ist, ist im AWT-Strang 67 der Abgas-Wärmetauscher 6 wasserseitig in Reihe mit einer Mindesttemperatur-Regelung geschaltet, die ein Zweiwege-Ventil 17 umfasst. Das Stellglied der Regelung ist entweder ein wasserseitiger, stromabwärts des Abgas-Wärmetauschers 6 liegender WTW-Temperaturfühler 19 (WTW = Wärmetauscherwasser) oder ein abgasseitig im abfuhrseitigen Abgaskanalstück 7 liegender AG-Temperaturfühler (AG = Abgas). Die Regelung ist proportional (beispielsweise Kapillarrohrfühler und Dehnstoffelement) oder dreipunktintegral (beispielsweise elektrischer Stellantrieb mit Endschaltern). Die jeweils gemessene Temperatur wirkt als Regelgröße, die konstant gehalten wird, wobei die Stellgröße der Wasserdurchsatz durch den Abgas-Wärmetauscher 6 ist. Der Begriff Mindesttemperatur-Regelung bezieht sich nicht auf die Mindestrücklauftemperatur des Wärmeerzeugers 2 sondern bedeutet allgemein, dass durch diese Regelung der Durchsatz bei steigender Regeltemperatur vergrößert und bei fallender Regeltemperatur verringert wird. Hierdurch wird auch verhindert, dass die Regeltemperatur auf unvernünftig niedrige Temperaturen fällt und dadurch zuviel Wasser aus dem kältesten Anschluss 26 des Pufferspeichers 22 gezogen wird.

Für den Fall, dass die wasserseitige Temperatur die Regelgröße ist, muss auch bei stark unterschrittenem Sollwert ein Mindestumlauf des Wassers sichergestellt werden, damit Wärme aus dem Abgas-Wärmetauscher 6 zu dem WTW-Temperaturfühler 19 gelangen kann. Dieser Mindestumlauf kann durch einen parallel zum Zweiwege-Ventil 17 geschalteten Bypass 21 (ebenfalls ein Zweiwegeventil, jedoch ungeregelt) mit einstellbarem Mindestdurchlass erreicht werden. Dieser Bypass 21 und damit auch ein Mindestumlauf sind nicht notwendig, wenn der AG-Temperaturfühler 20 die Regelgröße liefert.

Fig. 1b zeigt eine Variante der erfindungsgemäßen Heizungsanlage 1, die sich von der Variante gemäß Figur 1a nur dadurch unterscheidet, dass der Pufferspeicher 22 mit vier Anschlüssen 23 bis 26 versehen ist und neben dem ersten AE-Dreiwege-Ventil 11 noch ein zweites AE-Dreiwege-Ventil 27 vorgesehen ist, das ebenfalls für die Anfahrentlastung eingesetzt wird. Somit kann für die Anfahrentlastung zunächst warmes Wasser aus dem oberen mittleren Anschluss 24, anschließend weniger warmes Wasser aus dem unteren mittleren Anschluss 25 entnommen werden, bevor das kälteste Wasser aus dem untersten Anschluss 26 dem Rücklauf 61 des Wärmeerzeugers 2 zugeführt wird. Ein Stellglied 28 des zweiten AE-Dreiwege-Ventils 27 kann von einem zweiten Puffertemperaturfühler 29 proportional (beispielsweise Kapillarrohrfühler und Dehnstoffelement) oder zweipunktintegral (beispielsweise elektrischer Stellantrieb mit selbsttätigem Rücklauf) gesteuert werden. Alternativ kann die Regelung des zweiten AE-Dreiwege-Ventils 27 von einem DV-Temperaturfühler 30 gesteuert werden, der die hinter dem zweiten AE-Dreiwege-Ventil 27 vorliegende Mischtemperatur misst. Die Regelung kann hier proportional oder dreipunktintegral (beispielsweise elektrischer Stellantrieb mit Endschaltern) sein. Weiter alternativ können die beiden AE-Dreiwege-Ventile 11 und 27 sowie das RLA-Dreiwege-Ventil 9 durch die in Fig. 4b beschriebene elektrische Kopplung 31 der drei involvierten elektrischen Stellantriebe 28, 12 und 9 allein von dem Regelkreis der Rücklaufanhebung geregelt werden. Hierbei ist nur die von dem RLA-Temperaturfühler 10 (alternativ an Position 32) gemessene Mindest-Rücklauftemperatur der Rücklaufanhebung die Regel- oder Führungsgröße.

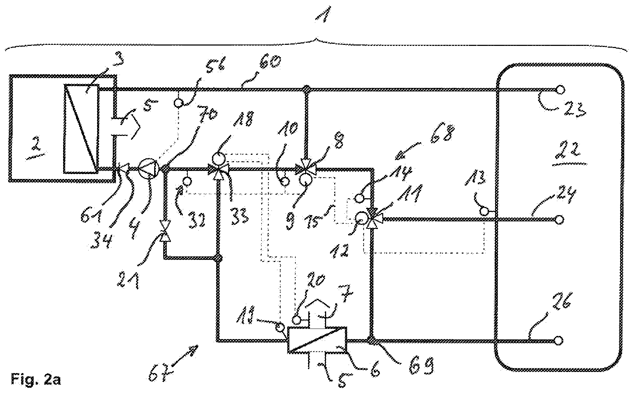

Fig. 2a zeigt eine Heizungsanlage 1, die sich von der Heizungsanlage 1 gemäß Fig. 1a dadurch unterscheidet, dass hier das Differenzdruck-Regel-Ventil (DRV) und das Zweiwege-Ventil (17 in Fig. 1a) entfallen sind. Stattdessen wird die Mindesttemperatur-Regelung durch ein MTR-Dreiwege-Ventil 33 (MTR = Mindesttemperatur-Regelung) realisiert. Das Stellglied 18 für das MTR-Dreiwege-Ventil 33 wirkt dabei auf das Verhältnis des Durchsatzes durch den vorliegend am MTR-Dreiwege-Ventil 33 endenden RLA -Strang 68 zum Durchsatz durch den AWT-Strang 67, der vorliegend ebenfalls am MTR-Dreiwege-Ventil 33 endet. So wird z.B.der Durchfluss durch den Abgas-Wärmetauscher 6 vergrößert, wenn von dem wasserseitigen, stromabwärts des Abgas-Wärmetauschers 6 liegenden WTW-Temperaturfühler 19 bzw. von dem abgasseitigen AG-Temperaturfühler 20 eine steigende Temperatur gemessen wird. Für den Fall, dass die Steuerung des Stellgliedes 18 über den wasserseitigen WTW-Temperaturfühler 19 gesteuert wird, ist wiederum ein Mindestumlauf sicherzustellen, der durch den Bypass 21 gewährleistet wird, der durch ein einstellbares Zweiwege-Ventil realisiert ist. Soweit hier der Bypass 21 vorgesehen wird, verzweigt sich der AWT-Strang 67 und endet zum einen am MTR-Dreiwege-Ventil 33 und zum anderen am Verbindungspunkt 70.

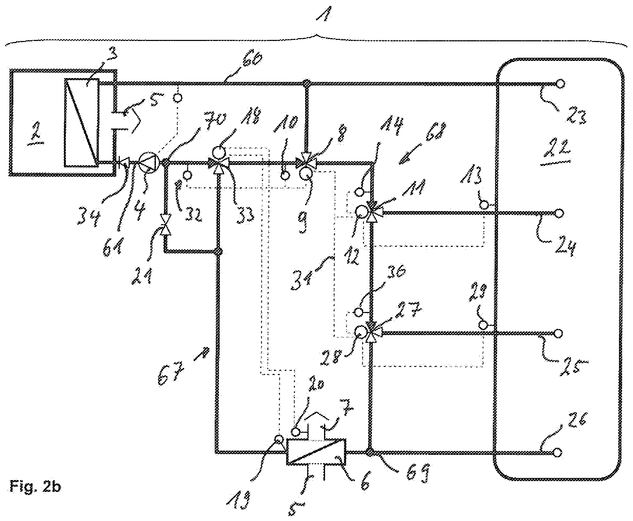

Fig. 2b zeigt eine Heizungsanlage 1, die sich von der Heizungsanlage gemäß Figur 2a lediglich dadurch unterscheidet, dass der Pufferspeicher 22 vier Anschlüsse anstelle von dreien hat. Die beiden mittleren Anschlüsse 24 und 25 speisen zwei AE-Dreiwege-Ventile 11 und 27 für die Anfahrentlastung. Diesbezüglich kann auf die Beschreibung zu Fig. 1b verwiesen werden.

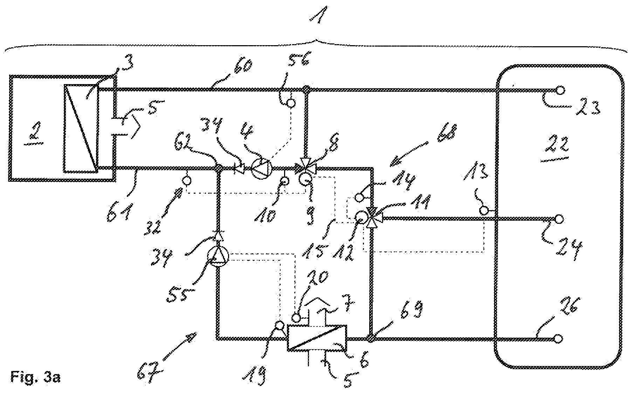

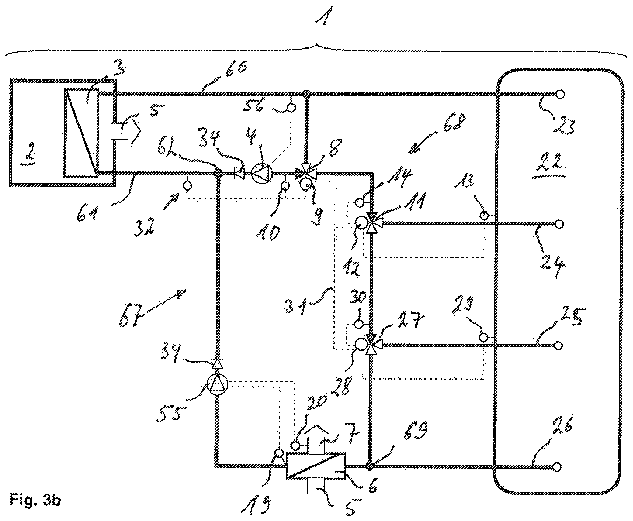

Die Figuren 3a und 3b zeigen Heizungsanlagen, die in Bezug auf die Gestaltung der Anfahrentlastung mit der in den Figuren 1a bzw. 1b übereinstimmen. Die Unterschiede zu 1a bzw. 1b sind durch die in Fließrichtung hinter dem Abgas-Wärmetauscher 6 und dem RLA-Dreiwege-Ventil 8 gegebenen Stränge 67 und 68 gegeben. So ist die Ladepumpe 4 zwischen dem RLA-Dreiwege-Ventil 8 und dem Verbindungspunkt 62 von Rücklauf 61 und dem dem Abgas-Wärmetauscher 6 folgenden AWT-Strang 67 angeordnet. Hierdurch entfällt das in Fig. 1a dargestellte Differenzdruck-Regel-Ventil 16. Gleichzeitig ist in dem auf den Wärmetauscher 6 folgenden Strang eine Umwälzpumpe 55 vorgesehen, die als Mindesttemperatur-Regler dient, wodurch das in der Heizungsanlage gemäß Fig. 1a vorgesehene Zweiwege-Ventil 17 und der Bypass 21 wegfallen. Die Umwälzpumpe 55 wird über die Temperatur geregelt, die entweder abwasserseitig am WTW-Temperaturfühler 19 oder abgasseitig am AG-Temperaturfühler 20 festgestellt wird. Bei Bedarf kann über die Umwälzpumpe 55 ein Mindestumlauf im AWT-Strang 67 gewährleistet werden, z.B. über eine niedrige Mindestdrehzahl oder über einen gepulsten Betrieb. Die Regelung kann auch hier proportional oder dreipunktintegral sein. Sowohl die Umwälzpumpe 55 als auch die Ladepumpe 4 sind in Reihe mit einem Rückflussverhinderer oder einer Schwerkraftbremse 34 geschaltet.

Die Heizungsanlage gemäß Fig. 3b unterscheidet sich von der Anlage gemäß Fig. 3a nur dadurch, dass gemäß Fig. 3b ein Pufferspeicher 22 mit vier Anschlüssen 23 bis 26 vorgesehen ist, so dass für die Anfahrentlastung zwei AE-Dreiwege-Ventile 11 und 27 vorliegen. Diesbezüglich wird auf die Beschreibung zu Fig. 1b verwiesen.

Fig. 4a zeigt eine Schaltung zu Realisierung der Kopplung 15, die es ermöglicht, das AE-Dreiwege-Ventil 11 und das RLA-Dreiwege-Ventil 8 mit einer einzigen Regelung zu steuern. Dies käme z. B. für die Heizungsanlagen gemäß Figuren 1a, 2a und 3a in Betracht, auf die sich die folgenden Bezugszeichen beziehen. So ist es sinnvoll, das AE-Dreiwege-Ventil 11 und das RLA-Dreiwege-Ventil 8 in einer Kaskade derart zu verschalten, dass das RLA-Dreiwege-Ventil 8 so lange geschlossen sein muss, wie das AE-Dreiwege-Ventil 11 noch nicht vollständig geöffnet ist. Umgekehrt kann das AE-Dreiwege-Ventil 11 nur dann den Status "vollständig geöffnet" durch Schließen verlassen, wenn das RLA-Dreiwege-Ventil 8 vollständig geschlossen ist. Ein Dreiwege-Ventil gilt im Sinne der Erfindung dann als vollständig geöffnet, wenn der Eingang, an dem das wärmere Wasser ansteht (im Beispiel der Fig. 1a und des RLA-Dreiwege-Ventils 8 der mit dem Vorlauf 60 verbundene Eingang), vollständig geöffnet und der andere Eingang vollständig geschlossen ist. Entsprechend ist ein Dreiwege-Ventil dann vollständig geschlossen, wenn der Eingang, an dem das wärmere Medium ansteht, vollständig geschlossen ist. Dann ist der andere Eingang für das kältere Medium vollständig geöffnet. Bei einem Dreiwege-Ventil der hier betroffenen Art sind nie beide Eingänge gleichzeitig geschlossen.

Im Beispiel der Fig. 1 hat dies für die Versorgung des Rücklaufs 61 in Strömungsrichtung vor dem Verbindungspunkt 62 folgende Konsequenzen: Sind sowohl das AE-Dreiwege-Ventil 11 als auch das RLA-Dreiwege-Ventil 8 vollständig geschlossen, erhält der Rücklauf 61 aus diesem Strang alleine Wasser aus dem untersten Anschluss 26. Erreicht das Rücklaufwasser im Wärmeerzeuger nicht die erforderliche Mindesttemperatur - auch nicht unter Berücksichtigung der Kondensationswärme aus dem Abgas-Wärmetauscher 6 - beginnt das AE-Dreiwege-Ventil 11 zu öffnen, so dass warmes Wasser aus dem mittleren Anschluss 24 des Pufferspeichers 22 beigemischt wird, bis bei entsprechendem Bedarf das AE-Dreiwege-Ventil 11 vollständig geöffnet ist und alleine Wasser aus dem mittleren Anschluss 24 zieht. Erst wenn die Temperatur des Wassers aus dem mittleren Anschluss 24 weiterhin nicht reicht, beginnt das RLA-Dreiwege-Ventil 8 mit dem Öffnen, so dass auch Vorlaufwasser aus dem Vorlauf 60 dem Rücklauf 61 beigemischt wird. Umgekehrt wird bei Überschreiten der Mindesttemperatur zunächst alleine das RLA-Ventil 8 geschlossen. Erst wenn das RLA-Dreiwege-Ventil 8 vollständig geschlossen wird, darf das AE-Dreiwege-Ventil 11 mit dem Schließen beginnen. So ist gewährleistet, dass im Pufferspeicher 22 im obersten Anschluss 23 möglichst viel des Vorlaufwassers aus dem Vorlauf 60 eingespeist wird und die Temperaturschichtung innerhalb des Pufferspeichers möglichst stabil bleibt.

In Fig. 4a sind nun schematisch der Stellmotor 9 für das RLA-Dreiwege-Ventil 8 und der Stellmotor 12 für das AE-Dreiwege-Ventil 11 mit einer elektrischen Verschaltung dargestellt. Die kaskadenartige Verschaltung wird im Folgenden anhand eines Beispiels erläutert. Es sollte zunächst davon ausgegangen werden, dass beide Dreiwege-Mischventile vollständig geschlossen sind, die beiden Stellmotoren 9 und 12 also in der Position "zu" sind. Wird nun über die Regelung der Befehl "öffnen" gegeben, in Fig. 4a symbolisiert durch einen Schalter 63, wird ein Stromkreis zum Stellmotor 12 geschlossen und der Motor beginnt von der Position "zu" in die Position "auf" zu fahren, solange der Befehl "öffnen" bestehen bleibt. Erreicht der Stellmotor 12 die Position "auf", das heißt das AE-Dreiwege-Ventil ist vollständig geöffnet, springt ein Endschalter 64 automatisch um, so dass der Stromkreis nun auf den Stellmotor 9 geschlossen wird, der sich nun ebenfalls von der Stellung "zu" in die Stellung "auf" bewegt. Ist auch das RLA-Dreiwege-Ventil 8 vollständig geöffnet, springt der weitere Endschalter 65 um und der Stromkreis ist unterbrochen. In diesem Extremfall würde der Rücklauf des Wärmeerzeugers 2 allein vom Vorlauf 60 gespeist. Dies entspricht z.B. dem Zustand beim Start der Heizungsanlage 1.

In entsprechender Weise verläuft das Schließen. Erhält die Verschaltung von der Regelung das Kommando "schließen", wird mittels des Schalters 63 der zum Schließen vorgesehene Stromkreis zum Stellmotor 9 geschlossen. Erst wenn der Stellmotor 9 in der Position "zu" ist und somit das RLA-Dreiwege-Ventil 8 vollständig geschlossen ist, springt der weitere Endschalter 66 um, so dass der Stellmotor 9 von der Stromversorgung abgeschnitten und stattdessen der Stromkreis für den Stellmotor 12 für das AE-Dreiwege-Ventil 11 geschlossen ist und mit dem Schließen beginnen kann. Die Öffnungs- und Schließbewegungen können durch ein Stoppsignal jederzeit unterbrochen werden (Dreipunktregelung). Ist auch der Stellmotor 12 in Position vollständig "zu", kann auch der weitere Endschalter 66b den Stromkreis trennen. Sobald der Stellmotor 9 bzw. 12 die Endposition verlassen hat, springt der entsprechende Endschalter 64 bis 66b jeweils wieder in die Ausgangsposition zurück, um die Kaskadenschaltung zu gewährleisten. Die Schalter sind selbstverständlich nur Symbole, sofern die Kaskadenverschaltung elektronisch oder mittels Datenverarbeitung realisiert wird.

Die oben beschriebene Kaskadierung hat den Vorteil, dass mit dem Signal einer einzigen Führungsgröße, z. B. der Temperatur des RLA-Temperaturfühlers 10, der RLA-Dreiwege-Mischer 8 und der AE-Dreiwege-Mischer 11 gemeinsam über eine einzige Regelung mit einem einzigen Dreipunkt-Signal geregelt werden können.

In entsprechender Weise kann auch im Falle von vier Anschlüssen 23 bis 26 am Pufferspeicher 22 gemäß den Figuren 1b, 2b und 3b vorgegangen werden. Fig. 4b zeigt die Kopplung 31 mittels einer Kaskadenverschaltung der Stellmotoren 9, 12 und 28 der beiden AE-Dreiwege-Ventile 27 und 11 und des RLA-Dreiwege-Ventils 8, welche gemeinsam derart geregelt werden, dass das AE-Dreiwege-Ventil 11 und das RLA-Dreiwege-Ventil 8 nur dann mit dem Öffnen beginnen können, wenn das in Strömungsrichtung davor liegende Dreiwege-Ventil bereits vollständig geöffnet ist. Beim Schließvorgang ist es in entsprechender Weise umgekehrt. Die Funktionsweise der Kaskadenverschaltung entspricht der der Fig. 4a, weshalb auf die diesbezügliche Beschreibung verwiesen wird.

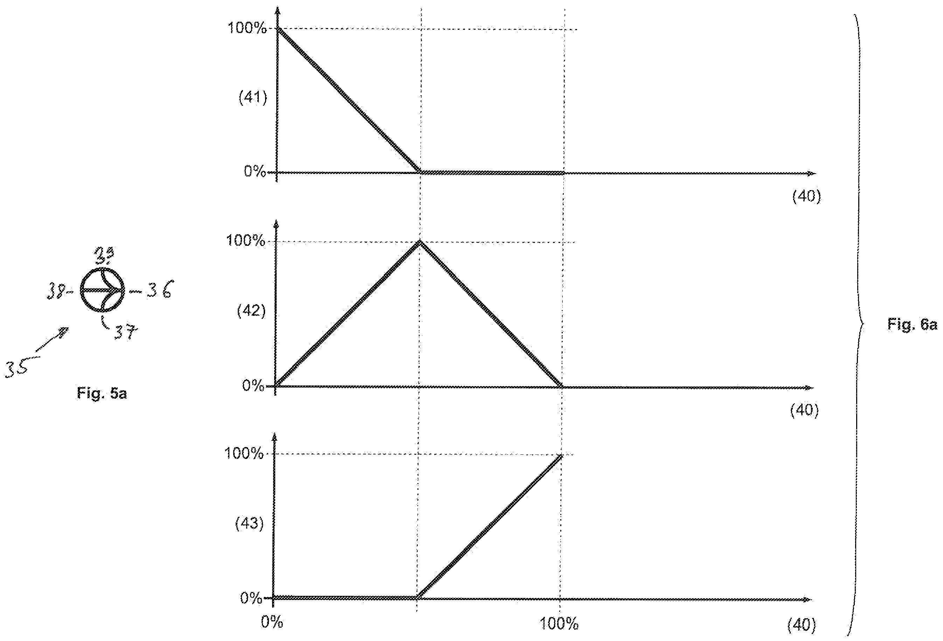

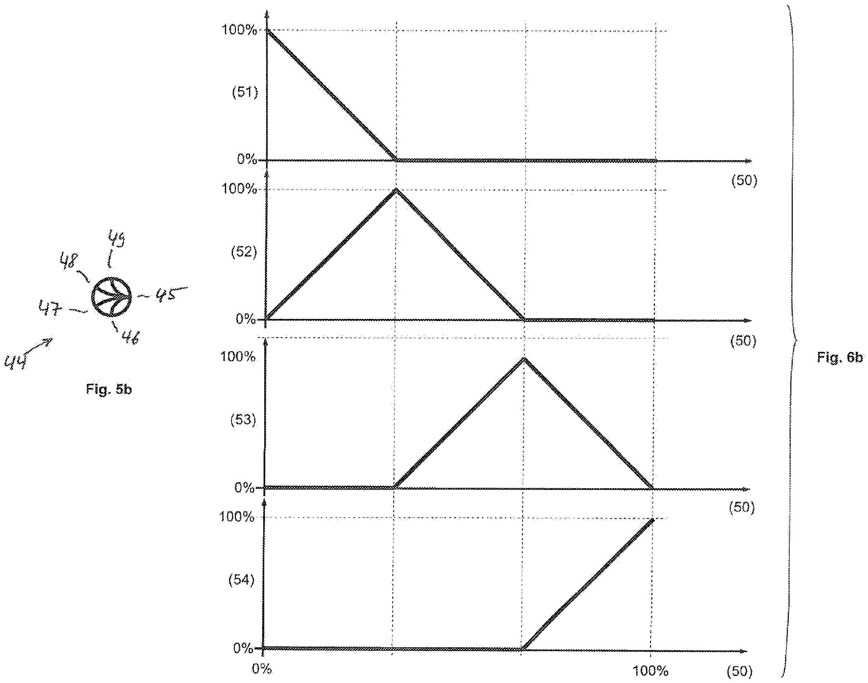

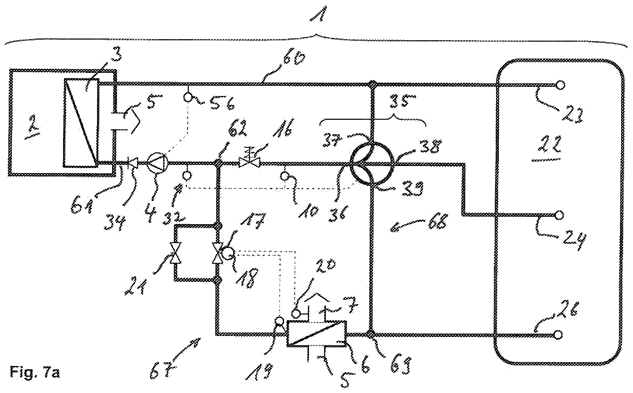

Eine Heizungsanlage 1 gemäß Fig. 7a entspricht der Heizungsanlage gemäß Fig. 1a mit dem Unterschied, dass das AE-Dreiwege-Ventil 11 und das RLA-Dreiwege-Ventil 8 in ein 4-Wege-Ventil 35 zusammengefasst wurden. Ein hierfür geeignetes 4-Wege-Ventil 35 ist in Fig. 5a schematisch dargestellt. Ein Eingang 39 ist mit dem untersten Anschluss 26 des Pufferspeichers 22, ein Eingang 38 mit dem mittleren Anschluss 24 des Pufferspeichers 22 und ein Eingang 37 mit dem Vorlauf 60 des Wärmeerzeugers 2 verbunden, während der Ausgang 36 des 4-Wege-Ventils 35 in den Rücklaufstrang 61 mündet. In Fig. 6a sind drei Graphen dargestellt, mit denen Strömungsdurchlässe 41 bis 43 der drei Eingänge 37 bis 39 über die Position 40 eines hier nicht dargestellten Stellkörpers des 4-Wege-Ventils wiedergegeben ist. Der oberste Graph stellt den Strömungsdurchlass 41 des Eingangs 37, der mittlere Graph den Strömungsdurchlass 42 des zweiten Eingangs 38 und der unterste Graph in Fig. 6a den Strömungsdurchgang 43 des Eingangs 39 zum Ausgang 36 des 4-Wege-Ventils 35 in Abhängigkeit von der Position des hier nicht dargestellten Stellkörpers dar. Hieraus ergibt sich folgendes Bild: In der Stellung 0 % des Stellkörpers ist der Eingang 37 vollständig geöffnet, während die beiden anderen Eingänge 38 und 39 vollständig geschlossen sind. Das bedeutet, dass das 4-Wege-Ventil 35 den Rücklaufstrang 61 allein über Wasser aus dem Vorlauf 60 bedient. Wird der Stellkörper bewegt, schließt sich der Eingang 37 und der Eingang 38 öffnet sich, so dass dem Wasser aus dem Vorlauf 60 Wasser aus dem mittleren Anschluss 24 beigemischt wird. In der Position 50 % ist der Eingang 38 vollständig geöffnet, der Eingang 37 jedoch vollständig geschlossen, genau wie der Eingang 39. Bei weiterer Bewegung des Stellkörpers beginnt ein Schließen des Eingangs 38 und ein Öffnen des Eingangs 39, so dass nun die Wasserströme aus dem mittleren Anschluss 24 und dem unteren Anschluss 26 gemischt werden, bis schließlich bei der Position 100 % des Stellkörpers allein Wasser aus dem untersten Anschluss 26 dem Rücklaufstrang 61 zugeführt würde.

Somit ersetzt dieses 4-Wege-Ventil 35 für einen Zwei-Zonen-Pufferspeicher die beiden in den Figuren 1a, 2a und 3a vorgestellten Dreiwege-Ventile 11 und 8. Auch hier erfolgt die Regelung mittels des RLA-Temperaturfühlers 10 (wahlweise alternativ auch in der Position 32) über ein einziges Stellsignal.

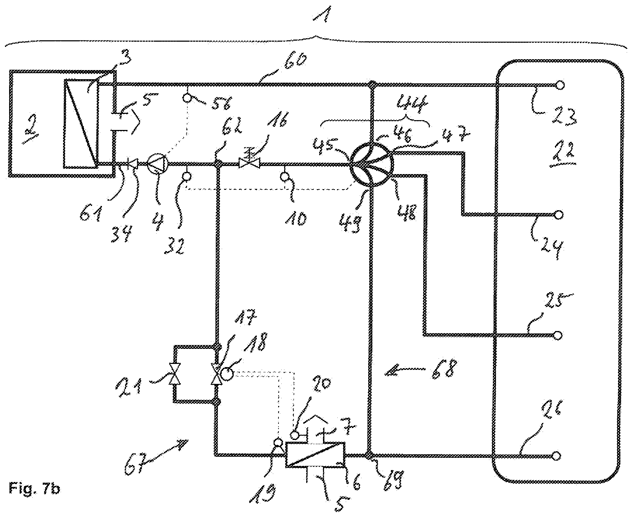

Fig. 7b zeigt eine Heizungsanlage 1, die der zu Fig. 7a ähnlich ist, mit dem Unterschied, dass ein 3-Zonen-Pufferspeicher 22 mit vier Anschlüssen 23 bis 26 vorgesehen ist und statt des 4-Wege-Ventils ein 5-Wege-Ventil 44 eingesetzt wird. Auch hier sind die Eingänge 46 bis 49 so verschaltet, dass ein Eingang immer nur dann vollständig geöffnet sein kann, wenn alle anderen Eingänge vollständig geschlossen sind und nur die Wasserströme benachbarter Eingänge miteinander gemischt werden können. Dies ist in zu den Figuren 5a und 6a entsprechender Weise in den Figuren 5b und 6b schematisch dargestellt mit dem 5-Wege-Ventil 44, dessen Ausgang 45, den Eingängen 46 bis 49 und den Stömungsdurchlässen 51 bis 54 dieser Eingänge 46-49 in Abhängigkeit von der Stellkörperposition 50 . Wegen der Erläuterung kann auf die Beschreibung zu den Figuren 5a und 6a verwiesen werden. Das 5-Wege-Ventil 44 ersetzt somit drei Dreiwege-Ventile, wie sie z. B. in Fig. 1b verwendet werden. Die Kombination eines 3-Zonen-Pufferspeichers mit dem 4-Wege-Ventil 35 bzw. eines Vier-Zonen-Pufferspeichers mit dem 5-Wege-Ventil 44 ist entsprechend auch bei den Heizungsanlagen gemäß den Figuren 2a, 2b, 3a und 3b so einzusetzen, dass die Dreiwege-Ventile in der Anlaufentlastung bzw. der Rücklaufanhebung ersetzt werden.

### Bezugszeichenliste

- (1): Heizungsanlage
- (2): Wärmeerzeuger
- (3): Primärwärmetauscher des Wärmeerzeugers
- (4): Ladepumpe
- (5): Abgaskanal aus dem Wärmeerzeuger zum Abgas-Wärmetauscher (Zufuhr)
- (6): Abgas-Wärmetauscher
- (7): Abgaskanal aus dem Abgas-Wärmetauscher (Abfuhr)
- (8): RLA-Dreiwegeventil,
- (9): Stellglied
- (10): RLA-Temperaturfühler
- (11): AE-Dreiwegeventil
- (12): Stellglied
- (13): Temperaturfühler
- (14): Temperaturfühler
- (15): Elektrische Kopplung der Stellantriebe
- (16): Differenzdruck-Regel-Ventil (DRV), typisch 50 bis 100 mbar
- (17): Zweiwegeventil
- (18): Stellglied
- (19): Temperaturfühler
- (20): Temperaturfühler
- (21): Bypass
- (22): Pufferspeicher
- (23): oberster Anschluss des Pufferspeichers (heiß)
- (24): mittlerer Anschluss des Pufferspeichers (warm)
- (25): weiter unterhalb liegender mittlerer Anschluss des Pufferspeichers (weniger warm)
- (26): unterster Anschluss des Pufferspeichers (kalt)
- (27): AE-Dreiwegeventil
- (28): Stellglied
- (29): Temperaturfühler
- (30): Temperaturfühler
- (31): Elektrische Kopplung als Folgeschaltung dreier Dreiwegeventile
- (32): Alternative Position des Temperaturfühlers der Rücklaufanhebung (RLA),
- (33): MTR-Dreiwegeventil
- (34): Rückflussverhinderer/Schwerkraftbremse
- (35): 4-Wege-Ventil
- (36): Ausgang des 4-Wege -Ventils
- (37): Erster Eingang des 4-Wege -Ventils
- (38): Zweiter Eingang des 4-Wege -Ventils
- (39): Dritter Eingang des 4-Wege -Ventils
- (40): Stellkörperposition des 4-Wege -Ventils
- (41): Strömungsdurchlass des ersten Eingangs
- (42): Strömungsdurchlass des zweiten Eingangs
- (43): Strömungsdurchlass des dritten Eingangs
- (44): 5-Wege-Ventil
- (45): Ausgang des 5-Wege -Ventils
- (46): Erster Eingang des 5-Wege -Ventils
- (47): Zweiter Eingang des 5-Wege -Ventils
- (48): Dritter Eingang des 5-Wege -Ventils
- (49): Vierter Eingang des 5-Wege -Ventils
- (50): Stellkörperposition des 5-Wege -Ventils
- (51): Strömungsdurchlass des ersten Eingangs
- (52): Strömungsdurchlass des zweiten Eingangs
- (53): Strömungsdurchlass des dritten Eingangs
- (54): Strömungsdurchlass des vierten Eingangs
- (55): Pumpe als Mindest-Temperatur-Regler
- (56): VL-Temperaturfühler
- (60): Vorlauf des Wärmeerzeugers
- (61): Rücklauf des Wärmeerzeugers
- (62): Verbindungspunkt
- (63): Schalter
- (64): Endschalter
- (65): Endschalter
- (66): Endschalter
- (67): AWT-Strang
- (68): RLA-Strang
- (69): Verbindungspunkt
- (70): Verbindungspunkt

## Patentansprüche

1. Verfahren zum Betrieb einer Heizungsanlage mit Rücklaufanhebung (RLA) und Brennwertnutzung, bei dem
a) ein Heißanschluss (23) eines Pufferspeichers (PS) (22) von einem Vorlauf (60) eines Wärmeerzeugers (2) mit einem Heizmedium gespeist wird,
b) einem Rücklauf (61) des Wärmeerzeugers (2) über einen RLA-Strang (68) Heizmedium aus mindestens einem mittleren PS-Warmanschluss (24, 25) des Pufferspeichers (22) und/oder aus einem untersten PS-Kaltanschluss (26) des Pufferspeichers (22) zugeführt wird, und
c) ein für Abgase des Wärmeerzeugers (2) vorgesehener Abgas-Wärmetauscher (AWT) (6) vom PS-Kaltanschluss (26) gespeist und ein hierdurch gegebener AWT-Durchsatz des Heizmediums über einen AWT-Strang (67) dem Rücklauf (61) des Wärmeerzeugers (2) zugeführt wird, wobei mittels eines vom RLA-Regelkreis unabhängigen AWT-Regelkreises die Temperatur des aus dem Abgaswärmetauscher (6) austretenden Abgases oder die Temperatur des aus dem Abgaswärmetauscher (6) austretenden Heizmediums geregelt und als Stellgröße der AWT-Durchsatz verwendet wird,
**dadurch gekennzeichnet, dass**
d) zur Rücklaufanhebung (RLA) mittels eines RLA-Regelkreises Heizmedium aus dem Vorlauf (60) beigemischt wird und
e) ein geregelter Zugang (8) von Heizmedium aus dem Vorlauf (60) des Wärmeerzeugers (2), ein geregelter Zugang (11, 27) von Heizmedium aus dem mindestens einen mittleren PS-Warmanschluss (24, 25) und ein geregelter Zugang von Heizmedium aus dem PS-Kaltanschluss (26) des Pufferspeichers (22) zum Rücklauf (61) des Wärmeerzeugers (2) derartig gegeneinander verschaltet werden, dass der geregelte Zugang (8) von Heizmedium aus dem Vorlauf (60) und der geregelte Zugang (11, 27) von Heizmedium aus dem mindestens einen mittleren PS-Warmanschluss (24, 25) frühestens dann jeweils zum Rücklauf (61) öffnet, wenn der im RLA-Strang (68) stromaufwärts gesehen nächstbenachbarte geregelte Zugang (11, 27) von Heizmedium bereits vollständig geöffnet ist und der geregelte Zugang (11, 27) von Heizmedium aus dem mindestens einen mittleren PS-Warmanschluss (24, 25) frühestens dann jeweils mit dem Schließen beginnt, wenn der im RLA-Strang (68) stromabwärts gesehen nächstbenachbarte geregelte Zugang (8, 24) von Heizmedium vollständig geschlossen ist.

2. Verfahren nach Anspruch 1, **dadurch gekennzeichnet, dass** im AWT-Strang (67) ein Mindestdurchsatz des Heizmediums eingerichtet wird.

3. Verfahren nach Anspruch 1 oder 2, **dadurch gekennzeichnet, dass** im RLA-Strang (68) in Strömungsrichtung des Heizmediums auf den Wärmeerzeuger (2) zu hinter dem geregelten Zugang (8) für das Heizmedium aus dem Vorlauf (60) und vor einem Verbindungspunkt (62) von RLA-Strang (68) und AWT-Strang (67) ein weitgehend konstanter, vom Durchsatz des Heizmediums möglichst unabhängiger Differenzdruckabfall eingestellt wird, der dem des Abgas-Wärmetauschers (6) bei Nenndurchsatz entspricht.

4. Heizungsanlage, umfassend
a) einen Wärmeerzeuger (WE) (2) mit einem WE-Vorlaufanschluss (60) und einem WE-Rücklaufanschluss (61),
b) einen Pufferspeicher (PS) (22),
c) Mittel zur Speisung des Pufferspeichers (22) mit einem Heizmedium aus dem WE-Vorlaufanschluss (60),
d) Mittel zur Speisung des WE-Rücklaufanschlusses (61) aus mindestens einem mittleren PS-Warmausgang (24, 25) und/oder einem PS-Kaltausgang (26) des Pufferspeichers (22) über einen RLA-Strang (68), und
e) einen für Abgase des Wärmeerzeugers vorgesehenen Abgas-Wärmetauscher (AWT) (6) mit einem mit dem PS-Kaltausgang (26) verbundenen AWT-Heizmediumeingang, und Mittel zur Zuführung eines durch den Abgas-Wärmetauscher (6) gegebenen AWT-Durchsatzes des Heizmediums zum WE-Rücklaufanschluss (61) über einen AWT-Strang (67), wobei eine AWT-Regelung vorgesehen ist, bei der die Temperatur des aus dem AWT-Heizmediumausgang austretenden Heizmediums oder die Temperatur des aus dem Abgas-Wärmetauschers (6) austretenden Abgases die Regelgröße und der AWT-Durchsatz die Stellgröße ist,
**dadurch gekennzeichnet, dass**
f) Mittel zur Mischung des aus dem Pufferspeicher (22) stammenden und zum WE-Rücklaufanschluss (61) fließenden Heizmediums mit Heizmedium aus dem WE-Vorlaufanschluss (60) vorgesehen sind, wobei eine RLA-Regelung die Temperatur des Heizmediums im WE-Rücklaufanschluss (61) auf eine Rücklaufsolltemperatur regelt und
g) ein geregelter Zugang (8) von Heizmedium aus dem Vorlauf (60) des Wärmeerzeugers (2), ein geregelter Zugang (11, 27) von Heizmedium aus dem mindestens einen mittleren PS-Warmanschluss (24, 25) und ein geregelter Zugang von Heizmedium aus dem PS-Kaltanschluss (26) des Pufferspeichers (22) zum Rücklauf (61) des Wärmeerzeugers (2) derartig gegeneinander verschaltet werden, dass der geregelte Zugang (8) von Heizmedium aus dem Vorlauf (60) und der geregelte Zugang (11, 27) von Heizmedium aus dem mindestens einen mittleren PS-Warmanschluss (24, 25) frühestens dann jeweils zum Rücklauf (61) öffnet, wenn der im RLA-Strang (68) stromaufwärts gesehen nächstbenachbarte geregelte Zugang (11, 27) von Heizmedium bereits vollständig geöffnet ist und der geregelte Zugang (11, 27) von Heizmedium aus dem mindestens einen mittleren PS-Warmanschluss (24, 25) frühestens dann jeweils mit dem Schließen beginnt, wenn der im RLA-Strang (68) stromabwärts gesehen nächstbenachbarte geregelte Zugang (8, 24) von Heizmedium vollständig geschlossen ist.

5. Vorrichtung nach Anspruch 4, **dadurch gekennzeichnet, dass** das Stellglied für die AWT-Regelung ein Stellkörper (18) eines im AWT-Strang (67) angeordneten Zweiwege-Ventils (17) ist.

6. Vorrichtung nach Anspruch 4, **dadurch gekennzeichnet, dass** das Stellglied für die AWT-Regelung ein Stellkörper (18) eines in einem Verbindungspunkt (62) des AWT-Strangs (67) mit dem RLA-Strang (68) angeordneten Dreiwege-Ventils (33) ist.

7. Vorrichtung nach Anspruch 4, **dadurch gekennzeichnet, dass** das Stellglied für die AWT-Regelung eine im AWT-Strang (67) angeordnete Umwälzpumpe (55) ist.

8. Vorrichtung nach einem der Ansprüche 4 bis 7, **dadurch gekennzeichnet, dass** zur Einrichtung eines Mindestdurchsatzes des Heizmediums im AWT-Strang (67) ein Bypass (21) vorgesehen ist.

9. Vorrichtung nach einem der Ansprüche 4 bis 8, **dadurch gekennzeichnet, dass** im RLA-Strang (68) in Strömungsrichtung des Heizmediums auf den Wärmeerzeuger (2) zu hinter dem geregelten Zugang (8) für das Heizmedium aus dem Vorlauf (60) und vor einem Verbindungspunkt (62) von RLA-Strang (68) und AWT-Strang (67) ein Differenzdruck-Regelventil (16) angeordnet ist.

10. Vorrichtung nach einem der Ansprüche 4 bis 9, **dadurch gekennzeichnet, dass** der Vorlauf (60) des Wärmeerzeugers (2) und der mindestens eine mittlere PS-Warmanschluss (24, 25) jeweils mittels eines Dreiwege-Ventils (8, 11, 27) an den RLA-Strang (68) angeschlossen sind.

11. Vorrichtung nach Anspruch 10, **dadurch gekennzeichnet, dass** die Dreiwege-Ventile für den Vorlauf (60) des Wärmeerzeugers (2) und für den mindestens einen mittleren PS-Warmanschluss (24, 25) in einem einzigen gemeinsamen RLA-Regelkreis mit einer einzigen Regelgröße geregelt werden.

12. Vorrichtung nach einem der Ansprüche 4 bis 11, **dadurch gekennzeichnet, dass** die geregelten Zugänge (8, 11, 27) des Heizmediums aus dem Vorlauf (60) des Wärmeerzeugers (2), aus dem mindestens einen mittleren PS-Warmanschluss (24, 25) sowie aus dem untersten PS-Kaltanschluss (26) gemeinsam über ein einzelnes geregeltes Mehrwege-Mischventil (35, 44) realisiert sind.

## Claims

1. Method for operating a heating system with return line boosting (RLA) and calorific value utilization, in which method
a) a hot connector (23) of a buffer store (PS) (22) is fed with a heating medium from a feed line (60) of a heat generator (2),
b) heating medium is supplied from at least one central PS warm connector (24, 25) of the buffer store (22), and/or from a lowermost PS cold connector (26) of the buffer store (22), to a return line (61) of the heat generator (2) via an RLA section (68), and
c) an exhaust gas heat exchanger (AWT) (6) which is provided for exhaust gases of the heat generator (2) is fed from the PS cold connector (26), and a resulting AWT throughput of the heating medium is supplied to the return line (61) of the heat generator (2) via an AWT section (67), wherein the temperature of the exhaust gas exiting the exhaust gas heat exchanger (6) or the temperature of the heating medium exiting the exhaust gas heat exchanger (6) is regulated by means of an AWT regulating loop, which is independent of the RLA regulating loop, and the AWT throughput is used as an actuating variable,
**characterized in that**
d) heating medium from the feed line (60) is admixed for the return line boosting (RLA) by means of an RLA regulating loop, and
e) a regulated access passage (8) for heating medium from the feed line (60) of the heat generator (2), a regulated access passage (11, 27) for heating medium from the at least one central PS warm connector (24, 25) and a regulated access passage for heating medium from the PS cold connector (26) of the buffer store (22) to the return line (61) of the heat generator (2) are connected to one another in such a way that the regulated access passage (8) for heating medium from the feed line (60) and the regulated access passage (11, 27) for heating medium from the at least one central PS warm connector (24, 25) in each case opens with respect to the return line (61) at the earliest when that regulated access passage (11, 27) for heating medium which is the next adjacent one as viewed upstream in the RLA section (68) is already completely open and the regulated access passage (11, 27) for heating medium from the at least one central PS warm connector (24, 25) in each case starts to close at the earliest when that regulated access passage (8, 24) for heating medium which is the next adjacent one as viewed downstream in the RLA section (68) is completely closed.

2. Method according to Claim 1, **characterized in that** a minimum throughput of the heating medium is established in the AWT section (67).

3. Method according to Claim 1 or 2, **characterized in that** a substantially constant differential pressure drop, which is as far as possible independent of the throughput of the heating medium and which corresponds to that of the exhaust gas heat exchanger (6) at a nominal throughput, is set in the RLA section (68) downstream of the regulated access passage (8) for the heating medium from the feed line (60) and upstream of a connection point (62) of the RLA section (68) and the AWT section (67) in the flow direction of the heating medium towards the heat generator (2).

4. Heating system, comprising
a) a heat generator (WE) (2) having a WE feed connector (60) and a WE return connector (61),
b) a buffer store (PS) (22),
c) means for feeding the buffer store (22) with a heating medium from the WE feed connector (60),
d) means for feeding the WE return connector (61) from at least one central PS warm outlet (24, 25), and/or from a PS cold outlet (26), of the buffer store (22) via an RLA section (68), and
e) an exhaust gas heat exchanger (AWT) (6) which is provided for exhaust gases of the heat generator and which has an AWT heating medium inlet which is connected to the PS cold outlet (26), and means for supplying an AWT throughput of the heating medium to the WE return connector (61) via an AWT section (67), which throughput is given by way of the exhaust gas heat exchanger (6),
wherein there is provided AWT regulation in which the temperature of the heating medium exiting the AWT heating medium outlet or the temperature of the exhaust gas exiting the exhaust gas heat exchanger (6) is the regulating variable and the AWT throughput is the actuating variable,
**characterized in that**
f) means are provided for mixing with heating medium from the WE feed connector (60) the heating medium which comes from the buffer store (22) and which flows to the WE return connector (61), wherein RLA regulation regulates the temperature of the heating medium in the WE return connector (61) to a return target temperature, and
g) a regulated access passage (8) for heating medium from the feed line (60) of the heat generator (2), a regulated access passage (11, 27) for heating medium from the at least one central PS warm connector (24, 25) and a regulated access passage for heating medium from the PS cold connector (26) of the buffer store (22) to the return line (61) of the heat generator (2) are connected to one another in such a way that the regulated access passage (8) for heating medium from the feed line (60) and the regulated access passage (11, 27) for heating medium from the at least one central PS warm connector (24, 25) in each case opens with respect to the return line (61) at the earliest when that regulated access passage (11, 27) for heating medium which is the next adjacent one as viewed upstream in the RLA section (68) is already completely open and the regulated access passage (11, 27) for heating medium from the at least one central PS warm connector (24, 25) in each case starts to close at the earliest when that regulated access passage (8, 24) for heating medium which is the next adjacent one as viewed downstream in the RLA section (68) is completely closed.

5. Device according to Claim 4, **characterized in that** the actuating member for the AWT regulation is an actuating body (18) of a two-way valve (17) which is arranged in the AWT section (67).

6. Device according to Claim 4, **characterized in that** the actuating member for the AWT regulation is an actuating body (18) of a three-way valve (33) arranged at a connection point (62) of the AWT section (67) and the RLA section (68).

7. Device according to Claim 4, **characterized in that** the actuating member for the AWT regulation is a circulating pump (55) arranged in the AWT section (67).

8. Device according to one of Claims 4 to 7, **characterized in that** a bypass (21) is provided for establishing a minimum throughput of the heating medium in the AWT section (67).

9. Device according to one of Claims 4 to 8, **characterized in that** a differential pressure regulating valve (16) is arranged in the RLA section (68) downstream of the regulated access passage (8) for the heating medium from the feed line (60) and upstream of a connection point (62) of the RLA section (68) and the AWT section (67) in the flow direction of the heating medium towards the heat generator (2).

10. Device according to one of Claims 4 to 9, **characterized in that** the feed line (60) of the heat generator (2) and the at least one central PS warm connector (24, 25) are connected to the RLA section (68) in each case by means of a three-way valve (8, 11, 27).

11. Device according to Claim 10, **characterized in that** the three-way valves for the feed line (60) of the heat generator (2) and for the at least one central PS warm connector (24, 25) are regulated in a single common RLA regulating loop by way of a single regulating variable.

12. Device according to one of Claims 4 to 11, **characterized in that** the regulated accesses (8, 11, 27) for the heating medium from the feed line (60) of the heat generator (2), from the at least one central PS warm connector (24, 25) and from the lowermost PS cold connector (26) are realized jointly via a single, regulated multi-way mixer valve (35, 44).

## Revendications

1. Procédé pour faire fonctionner une installation de chauffage avec relèvement du retour (RLA) et condensation, dans lequel
a) un raccord de chauffage (23) d'un accumulateur tampon (PS) (22) est alimenté en fluide de chauffage depuis une alimentation (60) d'un générateur de chaleur (2),
b) un retour (61) du générateur de chaleur (2) est alimenté en fluide de chauffage par le biais d'un tronçon RLA (68) depuis au moins un raccord chaud PS central (24, 25) de l'accumulateur tampon (22) et/ou depuis un raccord froid PS inférieur (26) de l'accumulateur tampon (22), et
c) un échangeur de chaleur à gaz d'échappement (AWT) (6) prévu pour les gaz d'échappement du générateur de chaleur (2) est alimenté depuis le raccord froid PS (26) et un débit AWT du fluide de chauffage ainsi obtenu est acheminé par le biais d'un tronçon AWT (67) au retour (61) du générateur de chaleur (2), la température du gaz d'échappement sortant de l'échangeur de chaleur à gaz d'échappement (6) ou la température du fluide de chauffage sortant de l'échangeur de chaleur à gaz d'échappement (6) étant régulée au moyen d'un circuit de régulation AWT indépendant du circuit de régulation RLA et étant utilisée en tant que grandeur de commande du débit AWT,
**caractérisé en ce que**
d) pour le relèvement du retour (RLA) au moyen d'un circuit de régulation RLA, du fluide de chauffage provenant de l'alimentation (60) est ajouté en mélange et
e) un accès régulé (8) de fluide de chauffage provenant de l'alimentation (60) du générateur de chaleur (2), un accès régulé (11, 27) de fluide de chauffage provenant de l'au moins un raccord chaud PS central (24, 25) et un accès régulé de fluide de chauffage provenant du raccord froid PS (26) de l'accumulateur tampon (22) au retour (61) du générateur de chaleur (2) étant branchés les uns avec les autres de telle sorte que l'accès régulé (8) du fluide de chauffage provenant de l'alimentation (60) et l'accès régulé (11, 27) du fluide de chauffage provenant de l'au moins un raccord chaud PS central (24, 25) s'ouvrent vers le retour (61) au plus tôt à chaque fois lorsque l'accès régulé (11, 27) de fluide de chauffage le plus proche, vu dans le sens amont dans le tronçon RLA (68), est déjà complètement ouvert et de telle que l'accès régulé (11, 27) de fluide de chauffage provenant de l'au moins un raccord chaud PS central (24, 25) commence au plus tôt à chaque fois à se fermer lorsque l'accès régulé (8, 24) de fluide de chauffage le plus proche, vu dans le sens aval dans le tronçon RLA (68), est complètement fermé.

2. Procédé selon la revendication 1, **caractérisé en ce qu'**un débit minimal du fluide de chauffage est prévu dans le tronçon AWT (67).

3. Procédé selon la revendication 1 ou 2, **caractérisé en ce que** dans le tronçon RLA (68) dans le sens de l'écoulement du fluide de chauffage vers le générateur de chaleur (2) jusqu'à derrière l'accès régulé (8) pour le fluide de chauffage provenant de l'alimentation (60) et avant un point de connexion (62) du tronçon RLA (68) et du tronçon AWT (67), une chute de pression différentielle essentiellement constante, dans la mesure du possible indépendante du débit du fluide de chauffage, est ajustée, laquelle correspond à celle de l'échangeur de chaleur à gaz d'échappement (6) au débit nominal.

4. Installation de chauffage, comprenant
a) un générateur de chaleur (WE) (2) avec un raccord aller WE (60) et un raccord retour WE (61),
b) un accumulateur tampon (PS) (22),
c) des moyens d'alimentation de l'accumulateur tampon (22) en fluide de chauffage provenant du raccord aller WE (60),
d) des moyens d'alimentation du raccord de retour WE (61) à partir d'au moins une sortie chaude PS centrale (24, 25) et/ou d'une sortie froide PS (26) de l'accumulateur tampon (22) par le biais d'un tronçon RLA (68), et
e) un échangeur de chaleur à gaz d'échappement (AWT) (6) prévu pour les gaz d'échappement du générateur de chaleur, avec une entrée de fluide de chauffage AWT connectée à la sortie froide PS (26), et des moyens d'alimentation d'un débit AWT de fluide de chauffage fourni par l'échangeur de chaleur à gaz d'échappement (6) au raccord de retour WE (61) par le biais d'un tronçon AWT (67),
une régulation AWT étant prévue, dans laquelle la température du fluide de chauffage sortant de la sortie de fluide de chauffage AWT ou la température du gaz d'échappement sortant de l'échangeur de chaleur à gaz d'échappement (6) est la grandeur de réglage et le débit AWT est la grandeur de commande,
**caractérisée en ce que**
f) des moyens pour le mélange du fluide de chauffage provenant de l'accumulateur tampon (22) et s'écoulant vers le raccord de retour WE (61) avec du fluide de chauffage provenant du raccord d'alimentation WE (60) étant prévus, une régulation RLA régulant la température du fluide de chauffage dans le raccord de retour WE (61) à une température de consigne de retour et
g) un accès régulé (8) de fluide de chauffage provenant de l'alimentation (60) du générateur de chaleur (2), un accès régulé (11, 27) de fluide de chauffage provenant de l'au moins un raccord chaud PS central (24, 25) et un accès régulé de fluide de chauffage provenant du raccord froid PS (26) de l'accumulateur tampon (22) au retour (61) du générateur de chaleur (2) sont branchés les uns avec les autres de telle sorte que l'accès régulé (8) de fluide de chauffage provenant de l'alimentation (60) et l'accès régulé (11, 27) de fluide de chauffage provenant de l'au moins un raccord chaud PS central (24, 25) s'ouvrent vers le retour (61) à chaque fois au plus tôt lorsque l'accès régulé (11, 27) de fluide de chauffage le plus proche, vu dans le sens amont dans le tronçon RLA (68) est déjà complètement ouvert et que l'accès régulé (11, 27) de fluide de chauffage provenant de l'au moins un raccord chaud PS central (24, 25) commence à se fermer au plus tôt à chaque fois quand l'accès régulé (8, 24) de fluide de chauffage le plus proche, vu dans le sens aval dans le tronçon RLA (68), est complètement fermé.

5. Dispositif selon la revendication 4, **caractérisé en ce que** l'organe de commande pour la régulation AWT est un actionneur (18) d'une soupape à deux voies (17) disposée dans le tronçon AWT (67).

6. Dispositif selon la revendication 4, **caractérisé en ce que** l'organe de commande pour la régulation AWT est un actionneur (18) d'une soupape à trois voies (33) disposée au niveau d'un point de connexion (62) du tronçon AWT (67) avec le tronçon RLA (68).

7. Dispositif selon la revendication 4, **caractérisé en ce que** l'organe de réglage pour la régulation AWT est une pompe à circulation (55) disposée dans le tronçon AWT (67).

8. Dispositif selon l'une quelconque des revendications 4 à 7, **caractérisé en ce qu'**une dérivation (21) est prévue pour établir un débit minimal du fluide de chauffage dans le tronçon AWT (67).

9. Dispositif selon l'une quelconque des revendications 4 à 8, **caractérisé en ce que** dans le tronçon RLA (68) dans le sens d'écoulement du fluide de chauffage vers le générateur de chaleur (2) jusque derrière l'accès régulé (8) pour le fluide de chauffage provenant de l'alimentation (60) et avant un point de connexion (62) du tronçon RLA (68) et du tronçon AWT (67) est disposée une soupape de régulation de la pression différentielle (16).

10. Dispositif selon l'une quelconque des revendications 4 à 9, **caractérisé en ce que** l'alimentation (60) du générateur de chaleur (2) et l'au moins un raccord chaud PS central (24, 25) sont à chaque raccordés au moyen d'une soupape à trois voies (8, 11, 27) au tronçon RLA (68).

11. Dispositif selon la revendication 10, **caractérisé en ce que** les soupapes à trois voies pour l'alimentation (60) du générateur de chaleur (2) et pour l'au moins un raccord chaud PS central (24, 25) sont régulées dans un circuit de réglage RLA commun unique avec une grandeur de réglage unique.

12. Dispositif selon l'une quelconque des revendications 4 à 11, **caractérisé en ce que** les accès régulés (8, 11, 27) du fluide de chauffage provenant de l'alimentation (60) du générateur de chaleur (2), de l'au moins un raccord chaud PS central (24, 25) ainsi que du raccord froid PS inférieur (26) sont réalisés en commun par le biais d'une soupape de mélange régulée unique à plusieurs voies (35, 44).
